# EUROPÄISCHE PATENTSCHRIFT

(11) **EP 3 306 575 B1**
(45) Veröffentlichungstag und Bekanntmachung des Hinweises auf die Patenterteilung: **05.03.2025**
(21) Anmeldenummer: 17020314.5
(22) Anmeldetag: 20.07.2017
(51) Int. Cl.: G07C 1/00, G07C 1/24, H04L 1/08

(54) **VERFAHREN UND VORRICHTUNG ZUM ÜBERTRAGEN VON MEHREREN GEMESSENEN ZEITPUNKTEN**
METHOD AND DEVICE FOR TRANSFERRING MULTIPLE MEASURED TIMES
PROCÉDÉ ET DISPOSITIF DE TRANSMISSION DE PLUSIEURS POINTS TEMPORELS MESURÉS

(30) Priorität: 05.10.2016 DE 102016118804
(43) Veröffentlichungstag der Anmeldung: 11.04.2018
(73) Patentinhaber: Alge-Timing GmbH, 6890 Lustenau (AT)
(72) Erfinder: Alge, Wolfgang, 6890 Lustenau (AT)
(74) Vertreter: Heyerhoff Geiger GmbH & Co. KG

(56) Entgegenhaltungen:
- WO-A1-2013/112919
- US-A1- 2007 076 528
- US-A1- 2012 025 944
- US-B1- 6 963 270

## Beschreibung

Die Erfindung betrifft ein Verfahren zum Übertragen von mehreren gemessenen Zeitpunkten, bei dem ein erster Zeitpunkt durch einen ersten Zeitnehmer und ein zweiter Zeitpunkt durch einen zweiten Zeitnehmer erfasst wird und der erste Zeitpunkt von einem ersten Sender und der zweite Zeitpunkt von einem zweiten Sender jeweils mit einem Signal zu einem gemeinsamen Empfänger übertragen werden, wobei die Sender jeweils Geräten zugeordnet sind, die ein Startgerät, ein Zielgerät oder eines von mehreren Zwischengeräten sind, und die Sender jeweils eine Serie mit mehreren ihrem Zeitpunkt zugeordneten Signalen senden.

Bei sportlichen Wettkämpfen, in denen Distanzen überwunden werden, beispielsweise beim Skirennen, im Laufsport oder beim Schwimmen, gibt es neben einem Startgerät und einem Zielgerät unter Umständen mehrere Zwischengeräte, sodass zusätzlich zur Start- und Zielzeit auch Zwischenzeiten genommen werden. Die Zwischengeräte sind beispielsweise mit einer Lichtschranke oder einem anderen Zeitnehmer ausgerüstet, der die Zeit des das Gerät passierenden Sportlers erfasst. Zum Anzeigen von Zeiten ist bei sportlichen Veranstaltungen häufig eine Zeittafel vorhanden, auf der einem Publikum die Startzeit, die Einlaufzeit im Ziel und auch die Zwischenzeiten angezeigt werden können.

Startgerät, Zielgerät, Zwischengeräte und Zeittafel sind bei solchen sportlichen Veranstaltungen häufig weit voneinander entfernt. Eine Datenübertragung zum Übertragen der erfassten Zeiten zur Zeittafel erfolgt daher häufig per Funk, wobei die Geräte jeweils mit einem Sender und die Zeittafel mit einem Empfänger ausgestattet sind. Die Geräte schicken ihr Zeitsignal an den Empfänger, der das Zeitsignal an die Zeittafel zur Anzeige weitergibt.

Sind mehrere Sportler gleichzeitig auf der Strecke, wie es beim Laufen oder Schwimmen in der Regel der Fall ist, kann es sein, dass beispielsweise das Startgerät und ein Zwischengerät zum gleichen Zeitpunkt ihr Zeitsignal versenden. Der Empfänger erhält zwei sich überlagernde Signale, die er nicht trennen kann, sodass er beide Signale verwirft. Wird hierbei ein Startsignal oder ein Zielsignal verworfen, so ist das Rennen ungültig. Eine solche Signalkollision sollte deshalb vermieden werden.

Aus der US 2012/0025944 A1 und der WO 2013/112919 A1 sind ein automatisiertes Zeitnahmesystem für Sportveranstaltungen bekannt, bei dem Lesegeräte RFIDs von vorbeirennenden Sportlern auslesen. Zeit und Sportler-ID werden bestimmt und die werden im Systemnetzwerk verteilt. Um Datenverluste durch Signalkollision zu vermeiden, werden Datensignale in identischer Form mehrfach gesendet.

Die US 6963270 B1 beschreibt Verfahren zum Mehrfachsenden von Datensignalen in einem Warensystem. Das Mehrfachsenden umfasst mehrere Sendezyklen mit mehreren Zeitslots. Das Signal wird in jedem Sendezyklus einmal gesendet, wobei der Sendezeitslot in jedem Sendezyklus verschieden sein kann.

In der US2007/0076528 A1 ist ein Verfahren zum Senden von Sportzeitsignalen von Zeitnehmern einer Sportveranstaltung an Mobilgeräte an Athleten und von dort an eine Zentraleinheit beschrieben. Mittels eine vorbekannten Zeitverzögerung beim Senden kann aus der Ankunftszeit des Signals beim Mobilgerät die Sportzeit bestimmt werden.

Es ist eine Aufgabe der Erfindung, ein Verfahren zum Übertragen von mehreren gemessenen Zeitpunkten anzugeben, bei dem eine Zeitinformation eines Signals trotz Signalkollision erkannt werden kann.

Diese Aufgabe wird durch ein Verfahren der eingangs genannten Art gelöst, bei dem die Sender jeweils Geräten zugeordnet sind, die ein Startgerät, ein Zielgerät oder eines von mehreren Zwischengeräten sind, und die Sender jeweils eine Serie mit mehreren ihrem Zeitpunkt zugeordneten Signalen senden und erfindungsgemäß bezogen auf die Situation, in der das erste Signal von allen Sendern jeweils zeitgleich gesendet wird, das dritte Signal eines jeden Senders erst nach dem letzten zweiten Signal aller Sender gesendet wird und der Zeitabstand zwischen benachbarten dritten Signalen größer als zwischen benachbarten zweiten Signalen ist.

Die Sender senden jeweils mehrere ihrem Zeitpunkt zugeordnete Signale. Durch das mehrfache Senden von Signalen, die jeweils einem Zeitpunkt zugeordnet sind, geht ein Zeitpunkt auch dann nicht verloren, wenn zwei Signale auf dem Weg zum Empfänger kollidieren und von diesem nicht eindeutig aufgelöst empfangen werden können. Der Zeitpunkt wird mit einem späteren Signal erneut an den Empfänger übertragen und kann dann korrekt empfangen werden.

Die mehreren Signale, im Folgenden auch Mehrfachsignale oder Signale einer Serie genannt, können identisch sein. Die Signale einer Serie enthalten Information über den Zeitpunkt, auch Zeitinformation genannt, entweder direkt als Zeitpunkt oder als eine Information, aus der sich der Zeitpunkt mittels weiterer vorbekannter Information bestimmen lässt. Zweckmäßigerweise enthalten sie eine Signalnummer des Signals, also einen Zähler, der angibt, das wievielte einem Zeitpunkt zugeordnete Signal der Serie das aktuelle Signal ist. Somit unterscheiden sich die Signale einer Serie zumindest um den Zähler beziehungsweise die Signalnummer, insbesondere ausschließlich um den Zähler.

In einer vorteilhaften Ausführungsform der Erfindung sind die Zeitpunkte Messzeitpunkte einer Sportveranstaltung. Auf diese Weise können Startzeitpunkt, Zielzeitpunkt und/oder Zwischenzeiten zu einem Auswertesystem und/oder Anzeigesystem übertragen und dort ausgewertet beziehungsweise angezeigt werden. Beispielsweise ist der erste Zeitpunkt ein Startzeitpunkt eines Rennens und der zweite Zeitpunkt ist ein Zieleinlaufzeitpunkt des Rennens, und ein dritter Zeitpunkt ist eine Zwischenzeit aus diesem Rennen, die von einem dritten Sender zum Empfänger gesendet wird.

Vorteilhafterweise sind die Sender an Zeitnehmern angeordnet, die die Messzeitpunkte messen. Die gemessenen Zeitpunkte können so einfach und störungsfrei übertragen werden.

Die Zeitpunkte werden vom ersten und zweiten Sender zum gemeinsamen Empfänger übertragen. Hierdurch wird die Zeitinformation, die die beiden Signale tragen, an den Empfänger übertragen. Der Empfänger kann - insbesondere über Draht - mit einem Auswertesystem und/oder Anzeigesystem verbunden sein. Aus zumindest einer der Zeitinformationen kann nun ein Zeitpunkt erzeugt werden und dieser kann auf einem Zeitanzeigesystem angezeigt werden.

Die Sender senden jeweils mehrere ihrem Zeitpunkt zugeordnete Signale. Zweckmäßigerweise sendet zumindest eines dieser Sender, insbesondere beide Sender, diese Signale in einem vorbestimmten Zeitabstand zueinander. Hierbei können alle Signale einer Serie mit einem gleichen Zeitabstand zu dem beziehungsweise den zeitlich benachbarten Signalen der Serie gesendet werden. Besonders vorteilhaft ist es jedoch, wenn die Zeitabstandsdifferenzen zwischen den Signalen einer Serie von Signal zu Signal größer werden.

Um eine erneute Signalkollision zweier später gesendeter Signale zu vermeiden, ist es vorteilhaft, wenn ein Zeitabstand zwischen den Signalen einer Serie des ersten Senders vorbestimmt verschieden zu einem Zeitabstand zwischen den Signalen einer Serie des zweiten Senders ist. Kollidieren zwei Signale am Empfänger, so bleiben die nachfolgenden Signale der beiden Sender zeitlich getrennt und eine Signalkollision wird vermieden.

Um die Signale jeweils ihrem Sender zuordnen zu können, sollten die Signale einen Identifier, auch ID genannt, des Senders enthalten, also eine Information, aus der der Sender eindeutig identifiziert werden kann. Der ID ist Information gleichgestellt, aus der diese ID mithilfe vorbekannter Information abgeleitet werden kann.

Bei mehr als zwei Sendern kann eine erste Signalkollision zwischen einem ersten Senderpaar und eine zweite Signalkollision durch ein anderes Senderpaar erzeugt werden, sodass ein Zeitpunkt trotz Mehrfachsendung verloren geht. Um eine solche Gefahr bei drei oder mehr Sendern gering zu halten, ist es vorteilhaft, wenn ein Zeitabstand zwischen den Signalen einer Serie des dritten Senders größer ist als jeweils die Zeitabstände zwischen den Signalen der Serien der ersten beiden Sender.

Um bei drei oder mehr Sendern das Risiko einer Signalkollision mehrerer Signale der Serien gering zu halten und zudem eine Nachforschung nach einer Signalkollision zu erleichtern, wird zudem vorgeschlagen, dass bei zeitgleichem ersten Signal dreier Sender deren zweite Signale so in der Zeit liegen, dass die Zeitabstandsdifferenzen zwischen diesen zweiten Signalen gleich groß sind. Hierbei sind die Sender zweckmäßigerweise so eingestellt, dass sie in dieser Weise auch senden, wenn die ersten Signale nicht zeitgleich sind. Dies gilt zweckmäßigerweise auch für die nachfolgende Beschreibung.

Ebenfalls vorteilhaft zur Vermeidung von Mehrfachkollisionen ist es, wenn bei zeitgleichem ersten Signal dreier Sender deren dritte Signale so in der Zeit liegen, dass die Zeitabstandsdifferenzen zwischen diesen dritten Signalen größer sind als die Zeitabstandsdifferenzen zwischen den zweiten Signalen dieser Sender.

Mit gleichem Vorteil ist der Zeitabstand zwischen dem ersten und dem zweiten Signal eines jeden der Sender kleiner, als der Zeitabstand zwischen dem zweiten und dem dritten Signal der Sender.

Um eine Kollision von dritten Signalen zweier Serien zu vermeiden, ist es vorteilhaft, wenn bei zeitgleichem ersten Signal von zumindest drei Sendern die Sender ihr zweites Signal zu ihrem Zeitpunkt abgesendet haben, bevor einer der Sender ein drittes Signal zu seinem Zeitpunkt sendet.

Durch das mehrfache Senden eines Zeitpunkts zum Empfänger wird dieser Zeitpunkt mehrfach empfangen. Hierbei ist für die Weiterverarbeitung des Zeitpunkts nur ein einmaliges Empfangen notwendig, und bei einem nachfolgenden Empfangen kann der erneut erhaltene Zeitpunkt verworfen werden. Es ist insofern vorteilhaft, wenn der gemeinsame Empfänger zu einer einem Zeitpunkt zugeordneten Signalserie genau ein Ausgabesignal weiterleitet, beispielweise an eine Ausgabeeinheit, wie eine Anzeigetafel, sendet.

Das Ausgabesignal kann den Zeitpunkt enthalten. Die Ausgabeeinheit kann den Zeitpunkt auswerten oder ausgeben. Das Ausgabesignal kann zusätzlich oder alternativ einen Ausgabebefehl beinhalten, beispielsweise zusammen mit einer Ausgaberoutine. Nun kann der Sendezeitpunkt vom Empfänger an die Ausgabeeinheit den zuvor im Signal enthaltenen Zeitpunkt beinhalten, sodass der Zeitpunkt nicht mehr explizit an die Ausgabeeinheit weitergegeben werden muss.

Wird ein Ausgabebefehl ausgegeben, so sollte dieser nur 1x pro Signalserie zu einem Zeitpunkt gegeben werden.

Um einen Zeitpunkt auszugeben, beispielsweise auf einer Anzeigetafel anzuzeigen, oder weiterzuverarbeiten, muss das vom Empfänger weitergegebene Ausgabesignal den Zeitpunkt nicht explizit enthalten. Ein Sendezeitpunkt eines vom Empfänger ausgegebenen Signals kann den Zeitpunkt implizit enthalten. Beispielsweise gibt der gemeinsame Empfänger das Ausgabesignal mit einer vorbestimmten Zeitverzögerung an die Ausgabeeinheit aus. Die Ausgabezeit liegt mithin stets eine vorbestimmte Zeitdauer nach dem gemessenen Zeitpunkt. Die Zeitverzögerung ist hierbei zweckmäßigerweise auf den Zeitpunkt bezogen, sodass beispielsweise der Ausgabezeitpunkt des Ausgabesignals um die vorbestimmte Zeitverzögerung nach dem Zeitpunkt liegt. Wird das Ausgabesignal ohne erneute Zeitverzögerung von der Ausgabeeinheit empfangen, so liegt der Zeitpunkt um die vorbestimmte Zeitverzögerung vor dem Empfangszeitpunkt des Ausgabesignals bei der Ausgabeeinheit.

Zweckmäßigerweise ist die Ausgabezeit, zu der der Empfänger das Ausgabesignal ausgibt, unabhängig von der Ankunftszeit des Signals beim Empfänger. Hierdurch kann eine unbekannte Laufzeit des Signals vom Sender zum Empfänger ausgeglichen werden.

Bei einer sehr schnellen Abfolge von Zeitnahmen durch einen Zeitnehmer kann es vorkommen, dass der dem Zeitnehmer zugeordnete Sender ein zweites Signal senden muss, bevor er das erste Signal vollständig versandt hat. Laufen beispielsweise zwei Läufer fast zeitgleich über die Ziellinie, so kollidiert das Signal des zweiten Läufers mit dem noch nicht fertig gesendeten Signal des ersten Läufers. Da es sich um Signale verschiedener Serien desselben Senders handelt, kollidieren sämtliche Signale der beiden Serien.

Um dennoch beide Zeitnahmen zum Empfänger zu bringen und dort getrennt aufzulösen, wird vorgeschlagen, dass bei Signalkollision einer zweiten Serie eines Senders mit einer ersten und früheren Serie desselben Senders von jeder der beiden Serien zumindest ein Signal ausgelassen wird. Auf diese Weise kann im Zeitraum eines ausgelassenen Signals das betreffende Signal der anderen Serie gesendet werden. Da jede Serie mehrere Signale umfasst, kommt von jeder Serie zumindest eines am Empfänger an.

Besonders vorteilhaft ist es hierbei, wenn die Signale beider Serien alternierend ausgelassen werden. Beispielsweise wird von der zeitlich ersten Serie das erste Signal gesendet, wohingegen das erste Signal der zeitlich leicht späteren Serie weggelassen wird. Dann wir auf das Senden des zweiten Signals der ersten Serie verzichtet und stattdessen das zweite Signal der zweiten Serie gesendet, und so weiter.

Die Erfindung ist außerdem gerichtet auf eine Vorrichtung zum Anzeigen von mehreren gemessenen Zeitpunkten, umfassend mehrere Zeitnehmer mit jeweils zumindest einem Sender, einen Empfänger zum Empfangen von Signalen der Sender und ein mit dem Empfänger verbundenes Zeitanzeigesystem zum Anzeigen von Zeitpunkten, wobei die Sender jeweils Geräten zugeordnet sind, die ein Startgerät, ein Zielgerät oder eines von mehreren Zwischengeräten sind, und die Sender dazu vorbereitet sind, jeweils mehrere ihrem Zeitpunkt zugeordnete Signale zu senden. Um eine Zeitinformation eines Signals trotz einer Signalkollision fehlerfrei erkennen zu können, wird vorgeschlagen, dass die Sender erfindungsgemäß dazu eingerichtet sind, die Signale so zu senden, dass bezogen auf die Situation, in der das erste Signal von allen Sendern jeweils zeitgleich gesendet wird, das dritte Signal eines jeden Senders erst nach dem letzten zweiten Signal aller Sender gesendet wird und der Zeitabstand zwischen benachbarten dritten Signalen größer als zwischen benachbarten zweiten Signalen ist.

Die bisher gegebene Beschreibung vorteilhafter Ausgestaltungen der Erfindung enthält zahlreiche Merkmale, die in einigen abhängigen Ansprüchen zu mehreren zusammengefasst wiedergegeben sind. Diese Merkmale können jedoch zweckmäßigerweise auch einzeln betrachtet und zu sinnvollen weiteren Kombinationen zusammenfasst werden, insbesondere bei Rückbezügen von Ansprüchen, sodass ein einzelnes Merkmal eines abhängigen Anspruchs mit einem einzelnen, mehreren oder allen Merkmalen eines anderen abhängigen Anspruchs kombinierbar ist. Außerdem sind diese Merkmale jeweils einzeln und in beliebiger geeigneter Kombination sowohl mit dem erfindungsgemäßen Verfahren als auch mit der erfindungsgemäßen Vorrichtung gemäß den unabhängigen Ansprüchen kombinierbar. So sind Verfahrensmerkmale auch als Eigenschaft der entsprechenden Vorrichtungseinheit gegenständlich formuliert zu sehen und funktionale Vorrichtungsmerkmale auch als entsprechende Verfahrensmerkmale.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale.

Es zeigen:
- FIG 1: ein Zeitdatensystem mit mehreren Zeitnahmegeräten und einem Zeitanzeigegerät,
- FIG 2: ein Diagramm, im dem Sendezeiten mehrerer Signalserien mit jeweils mehreren Signalen dargestellt sind, mit denen Zeitdaten im Zeitdatensystem gesendet werden und
- FIG 3: zwei Signalserien eines Zeitnahmegeräts mit zueinander kollidierenden Signalen.

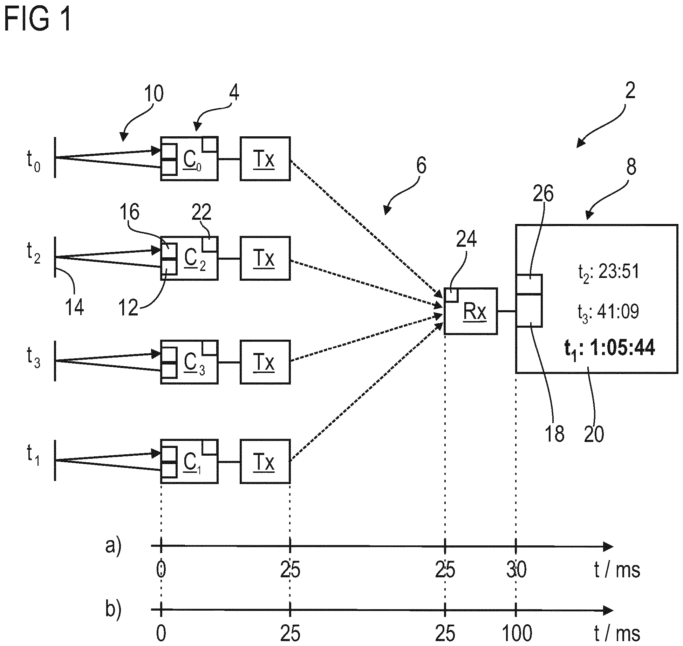

FIG 1 zeigt ein Zeitdatensystem 2 mit drei Untersystemen: einem Zeitnahmesystem 4, einem Zeitübertragungssystem 6 und einem Zeitanzeigesystem 8. Das Zeitnahmesystem 4 umfasst ein Startgerät C₀, ein Zielgerät C₁ und mehrere Zwischengeräte Cᵢ, mit i = 2, 3, ..., 9. Alle Geräte Cᵢ sind mit Zeitnehmern 10 ausgestattet, beispielsweise einer Lichtschranke oder einem Taster, die bei Unterbrechung beziehungsweise Betätigung einen Zeitpunkt tᵢ nehmen. Hierbei und im Folgenden sind mit Cᵢ alle Geräte mit i = 0, 1, ..., N gemeint, also auch das Startgerät C₀ und das Zielgerät C₁. Generell können die Zeitnehmer 10 optische, mechanische und/oder elektrische Zeitnehmer sein, wobei ein Zeitnehmer im Folgenden der Einfachheit halber eine Lichtschranke 10 ist. Jede Lichtschranke 10 weist einen Lichtsender 12, einen Spiegel 14 und einen Lichtempfänger 16 auf. Diese Einheiten sind so ausgerichtet, dass ein Senden des Lichtsenders 12 bei unterbrechungsfreier Strecke zum Spiegel 14 das Empfangen des Lichtsignals im Lichtempfänger 16 bewirkt. Eine Unterbrechung des Empfangs bewirkt die Zeitnahme des Zeitpunkts tᵢ, an dem die Unterbrechung des Empfangs beginnt. Der Zeitpunkt tᵢ wird anhand eines Zeitmessers 22 bestimmt, beispielsweise einer Uhr, den jedes der Geräte Cᵢ enthält.

Das Zeitübertragungssystem 6 umfasst zu jedem der Geräte Cᵢ einen Sender Tx. Die Sender Tx sind zum Aussenden von Funksignalen ausgeführt, die von einem zu den Sendern Tx zugehörigen Empfänger Rx empfangen und verarbeitet werden. Sender Tx und Empfänger Rx sind so ausgeführt, dass der Empfänger Rx die von allen Sendern Tx gesendeten Signale empfängt. Dies ist durch die in FIG 1 dargestellten gestrichelten Pfeile angedeutet. Die Sender Tx sind mit dem ihnen zugehörigen Gerät Cᵢ verdrahtet.

Das Zeitanzeigesystem 8 ist mit dem Empfänger Rx verdrahtet und umfasst eine Steuereinheit 18 und eine Anzeigetafel 20, auf der Zeiten für ein in größerer Entfernung stehendes oder sitzendes Publikum angezeigt werden. Beispielhaft sind in FIG 1 zwei Zwischenzeiten t₂, t₃ und eine Zieleinlaufzeit t₁ angezeigt.

Wird in einem der Geräte Cᵢ ein Zeitpunkt tᵢ erzeugt, so wird ein digitales Signal mit einer Zeitinformation erzeugt und an den dem entsprechenden Gerät Cᵢ zugeordneten Sender Tx weitergeleitet. Der Sender Tx wandelt das Signal in ein Funksignal um und sendet dieses Signal aus. Vom Zeitpunkt tᵢ, den das entsprechende Gerät Cᵢ durch das Unterbrechen der Lichtschranke 10 genommen hat, bis zum Absenden des Signals durch den zugeordneten Sender Tx vergehen in diesem Ausführungsbeispiel 25 ms, wie im unteren Teil von FIG 1 anhand der Zeitschienen a) und b) dargestellt ist.

Die Übertragung des Signals vom Sender Tx zum Empfänger Rx geht über eine direkte Funkstrecke ohne zwischengeschaltete Geräte. Die Signalübertragung geht insofern sehr schnell, sodass die hierfür in Anspruch genommene Zeit vernachlässigt werden kann. Das Signal wird daher vom Empfänger Rx ebenfalls nach 25 ms nach der Zeitauslösung empfangen. Der Empfänger Rx wandelt das Signal in ein für das Zeitanzeigesystem 8 verarbeitbares Signal um und sendet dieses zum Zeitanzeigesystem 8. Hierfür werden beispielsweise 5 ms gebraucht, sodass dieses Signal das Zeitanzeigesystem 8 30 ms nach dem Auslösezeitpunkt tᵢ erreicht, wie in dem oberen Zeitstrahl a) in FIG 1 dargestellt ist. Das Zeitanzeigesystem 8 erkennt aus der Zeitinformation des Signals den entsprechenden Zeitpunkt tᵢ und zeigt diesen auf der Anzeigetafel 20 an.

Zur Zuordnung des Signals mit der Zeitinformation bzw. des Zeitpunkts tᵢ zum entsprechenden Gerät Cᵢ enthält das von dem Sender Tx gesendete Signal einen Zuordnungscode, beispielsweise die Geräte-ID, durch den sich der übertragene Zeitpunkt tᵢ eindeutig einem der Geräte Cᵢ zuordnen lässt. Hinsichtlich der Zeitinformation besteht die Möglichkeit, dass das Signal den Zeitpunkt tᵢ an sich enthält, sodass eindeutig ist, was die Anzeigetafel 20 anzeigen soll. Der Zeitpunkt ist als mehrere Bits im Signal als Zeitinformation enthalten. Es besteht jedoch auch die Möglichkeit, dass das Signal die Zeitinformation in seinem Sende- oder Empfangszeitpunkt beinhaltet. Wird das Signal zum Zeitpunkt t empfangen, so kann die Zeitinformation die Zeit T_{I} = t - t_{V} sein, mit T_{I}: Zeitinformation und t_{V}: bekannte Verzögerungszeit, zum Beispiel die Zeitspanne zwischen einem Ereignis und einem Aussenden bzw. Empfangen des Signals.

So kann in einer Ausführungsvariante die Zeitinformation im Empfangszeitpunkt enthalten sein, wobei der Zeitpunkt tᵢ erst im Empfänger Rx aus der Zeitinformation, also zum Beispiel dem Empfangszeitpunkt, erzeugt wird. Explizite Information zum Zeitpunkt tᵢ können im übertragenen Signal zum Empfänger Rx zusätzlich als Code enthalten sein, dies ist jedoch nicht notwendig. Dem Empfänger Rx ist die Zeitspanne vom Ereignis bis zum Empfang bekannt, also zum Beispiel die Übertragungsdauer vom Auslösezeit-punkt tᵢ bis zur Ankunft des entsprechenden Signals am Empfänger Rx, in diesem Ausführungsbeispiel 25 ms. Zudem umfasst der Empfänger Rx eine Uhr 24, die mit den Uhren 22 synchronisiert sein kann und mithilfe derer der Zeitpunkt der Ankunft des Signals beim Empfänger Rx festgestellt wird. Von dem Ankunftszeitpunkt wird nun die Übertragungsdauer, also in diesem Beispiel 25 ms, abgezogen, sodass sich der ursprüngliche Zeitpunkt tᵢ ergibt. Das an das Zeitanzeigesystem 8 vom Empfänger Rx übergebene Signal enthält somit die Geräte-ID und den Zeitpunkt tᵢ an sich.

Alternativ ist es möglich, dass das Zeitanzeigesystem 8 eine eigene Uhr 26 aufweist, die mit den Uhren 22 synchronisiert ist. Der Steuereinheit 18 ist die Übertragungszeit vom Auslösezeitpunkt tᵢ bis zur Ankunft des Signals vom Empfänger Rx am Zeitanzeigesystem 8 bekannt. Vom gemessenen Ankunftszeitpunkt wird die Übertragungsdauer, in diesem Ausführungsbeispiel 30 ms, abgezogen, sodass der Auslösezeitpunkt tᵢ erhalten wird.

In einem weiteren Ausführungsbeispiel der Erfindung wartet der Empfänger Rx eine vorbestimmte Verzögerungszeit, bis er sein Signal an das Zeitanzeigesystem 8 ausgibt. Beispielsweise sei die gesamte Übertragungsdauer vom Zeitpunkt tᵢ bis zum Empfang des Empfängersignals durch das Zeitanzeigesystem 8 auf 100 ms oder einen anderen vorbestimmten Zeitwert festgelegt, wie in der unteren Zeitschiene b) in FIG 1 dargestellt ist. Der Empfänger Rx verzögert daher die Übertragung seines Signals an das Zeitanzeigesystem 8 um 70 ms. Das Zeitanzeigesystem 8 ermittelt mithilfe seiner Uhr 26 den Empfangszeitpunkt und subtrahiert die festgelegte Übertragungszeit, sodass sich der Auslösezeitpunkt tᵢ ergibt, der auf der Anzeigetafel 20 angezeigt wird.

Dieses Vorgehen ist besonders geeignet, wenn die Übertragung des Funksignals von einem oder mehreren der Sender Tx zum Empfänger Rx verzögert werden könnte oder bestimmten oder unbestimmten Zeitschwankungen unterliegen kann. Wird das Zeitsignal beispielsweise durch ein oder mehrere Netzwerkgeräte geleitet, die zwischen dem Sender Tx und dem Empfänger Rx angeordnet sind, so ist die Zeitdauer vom Zeitpunkt tᵢ bis zum Empfang des Signals durch den Empfänger Rx nicht immer gleich. Die Zeitdauer kann jedoch vom Empfänger Rx ermittelt werden, der die entsprechende Verzögerungszeit berechnet. Bekannte oder unbekannte Zeitschwankungen innerhalb des Zeitübertragungssystems 6 können daher vollständig innerhalb des Zeitübertragungssystems 6 ausgeglichen werden, sodass eine Anpassung des Zeitanzeigesystems 8 um solche Schwankungen nicht notwendig ist.

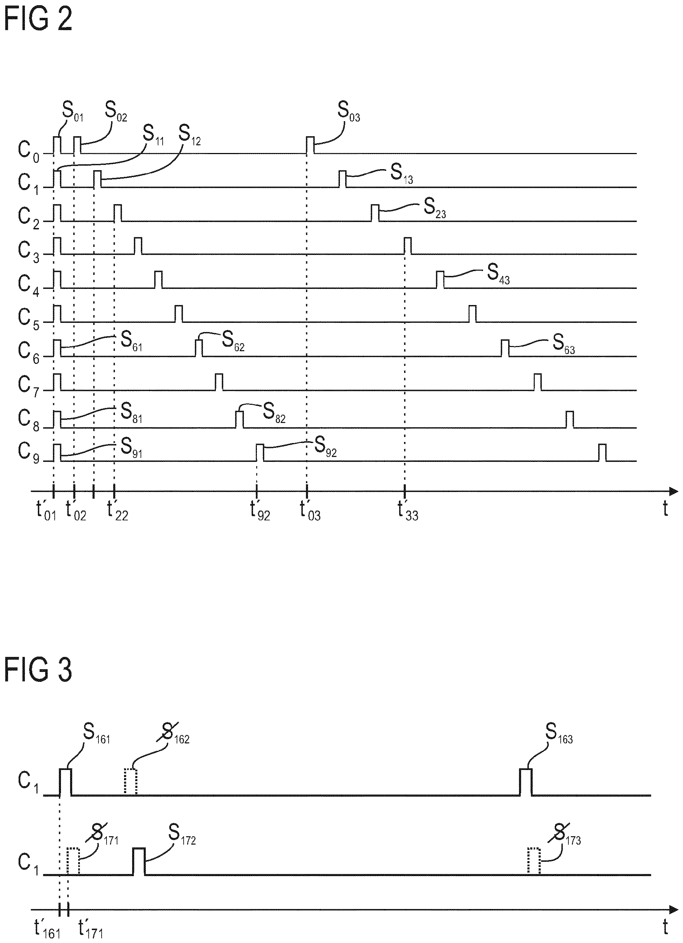

Werden von zwei oder mehr Sendern Tx zeitgleich Signale gesendet oder liegen zeitlich so eng beieinander, dass sich die Signale teilweise überschneiden, so ist eine Signalauflösung im Empfänger Rx unter Umständen nicht möglich. Entsprechend können die Zeiten nicht ordnungsgemäß auf der Anzeigetafel 20 dargestellt werden. Eine solche Signalkollision ist durch die Pfeile in FIG 1 angedeutet und in der Darstellung aus FIG 2 konkret gezeigt.

FIG 2 zeigt ein Zeitdiagramm, in dem die Sendung von Signalen S gegen die Zeit t aufgetragen dargestellt ist. In diesem Ausführungsbeispiel enthält ein Zeitnahmesystem 4 ein Startgerät C₀, ein Zielgerät C₁ und acht Zwischengeräte C₂ bis C₉. Bei dem in FIG 2 gezeigten Ausführungsbeispiel sendet der einfachen Darstellung halber jedes der Geräte Cᵢ beziehungsweise deren zugehörige Sender Tx zum Zeitpunkt t'₀₁ ein Signal Sᵢ₁ aus. Da diese zehn Signale Sᵢ₁ zum gleichen Zeitpunkt ausgesendet werden, kollidieren sie am Empfänger Rx, der die Signale S₀₁ bis S₉₁ nicht auflösen kann. Die gestrichenen Zeitpunkte t'ᵢᵢ in FIG 2 geben diejenigen Zeitpunkte an, zu denen ein oder mehrere Signale S vom entsprechenden Sender Tx ausgesendet werden. Ein Zeitpunkt t'ᵢ₀ liegt um die Übertragungsdauer, in diesem Beispiel 25 ms, hinter dem entsprechenden Auslösezeitpunkt tᵢ.

Zur Lösung dieses Problems sendet jedes Gerät Cᵢ sein einem Zeitpunkt tᵢ zugeordnetes Signal mehrfach. Bei dem in FIG 2 gezeigten Ausführungsbeispiel sendet jedes Gerät Cᵢ sein Signal dreifach. Ein erstes Signal Sᵢ₁ wird unmittelbar nach dessen Erzeugung im Gerät Cᵢ an den Sender Tx gegeben und von dort versendet. Ein zweites Signal Sᵢ₂ wird um einen vorbestimmten Zeitabstand nach dem ersten Signal Sᵢ₁ gesendet. Dieser Zeitabstand ist bei allen im Zeitübertragungssystem 6 eingesetzten Sendern Tx beziehungsweise den zugehörigen Geräten Cᵢ verschieden. Im Ausführungsbeispiel aus FIG 2 sendet das Startgerät C₀ sein zweites Signal S₀₂ zum Zeitpunkt t'₀₂, der beispielsweise 15 ms hinter dem Zeitpunkt t'₀₀ liegt. Der Zeitabstand beträgt somit 15 ms. Das Zielgerät C₁ hat jedoch einen größeren voreingestellten Zeitabstand, beispielsweise 30 ms. Das zweite Signal S₁₂ wird daher um diesen größeren Zeitabstand später als das erste Signal S₁₁ gesendet.

In gleicher Weise senden auch die Zwischengeräte C₂ bis C₉ ihre zweiten Signale Sᵢ₂ jeweils um einen vorbestimmten Zeitabstand nach dem zweiten Signal S₂ des vorhergehenden Geräts Cᵢ. Die Zeitabstände sind für alle Geräte Cᵢ verschieden. Es ist jedoch vorteilhaft, wenn die Zeitabstanddifferenzen zwischen einander nachfolgenden zweiten Signalen Sᵢ₂ - bei gleichzeitigem ersten Signal Sᵢ₁ - gleich sind, also vom ersten zum zweiten und vom zweiten zum dritten Gerät Cᵢ usw. In diesem Ausführungsbeispiel beträgt die Zeitabstandsdifferenz jeweils 15 ms, das zweite Signal Sᵢ₂ eines Zwischengeräts Cᵢ wird daher um den Zeitabstand beziehungsweise die 15 ms nach dem zweiten Signal Sᵢ₂ des vorhergehenden Zwischengeräts Cᵢ beziehungsweise des Startgeräts C₀ gesendet.

Auf diese Weise wird selbst bei einer Signalkollision der ersten Signale Sᵢ₁ gewährleistet, dass die beiden nachfolgenden zweiten Signale Sᵢ₂ der gleichen Geräte ausreichend nacheinander beim Empfänger Rx ankommen, sodass diese Signale Sᵢ₂ dort getrennt werden können. Dies ist aus dem Diagramm in FIG 2 ersichtlich. In dem Fall, dass zwei erste Signale Sᵢ₁ kollidieren, sind die zweiten Signale Sᵢ₂ ausreichend weit voneinander getrennt.

Auch wenn sich beispielsweise das Signal S₁₁ zwischen die Signale S₀₁ und S₀₂ schieben würde, so sind diese beiden Signale S₀₁ und S₀₂ doch so weit voneinander getrennt, dass das Signal S₁₁ nicht beide stören kann. Die Zeitabstandsdifferenz, also ein Abstand zwischen benachbarten Signalen S eines Geräts Cᵢ, ist daher so weit, dass ein Signal S eines anderen Geräts Cᵢ zwischen diesen beiden Signale S eingefügt werden kann und hierbei maximal eines der beidseitig benachbarten Signale S stören kann.

Je nachdem, wie viele Zwischengeräte Cᵢ vorhanden sind und wie viele Sportler im Feld sind, kann es vorkommen, dass ein Signal S vom Signal S eines anderen Geräts Cᵢ störend überlagert wird. Das zweite Signal Sᵢ₂ des ersten Geräts Cᵢ kann nun von einem Signal Sᵢᵢ eines dritten Geräts Cᵢ überlagert werden, sodass das erste Gerät Cᵢ seine Information nicht zum Empfänger Rx bringen kann.

Um auch bei einem solchen Fall eine erfolgreiche Datenübertragung zwischen einem Sender Tx und dem Empfänger Rx zu erreichen, sendet jedes Gerät Cᵢ ein drittes Signal Sᵢ₃, wie in FIG 2 dargestellt ist. Außerdem ist die Zeitabstandsdifferenz der dritten Signale Sᵢ₃ größer als die der zweiten Signale Sᵢ₂. Oder in anderen Worten: Der Zeitabstand zwischen benachbarten dritten Signalen Sᵢ₃ ist größer als zwischen benachbarten zweiten Signalen Sᵢ₂ - bei zeitgleichen ersten Signalen Sᵢ₁. Unter benachbarten Signalen können hierbei zeitlich nebeneinander liegende Signale S verstanden werden unter der Voraussetzung, dass das erste Signal von den Geräten Cᵢ jeweils zeitgleich gesendet wird. Auf diese Weise wird vermieden, dass eine Störung eines dritten Signals Sᵢ₃ durch ein zweites Signal Sᵢ₃ des gleichen Geräts erfolgt, das bereits das zweite Signal Sᵢ₂ der anderen Einheit gestört hat.

Das dritte Signal Sᵢ₃ eines jeden Geräts Cᵢ wird hierbei erst nach dem letzten zweiten Signal Sᵢ₂ aller Geräte Cᵢ gesendet - bezogen auf die Situation, in der das erste Signal S von allen Geräten Cᵢ jeweils zeitgleich gesendet wird. Dies ist in FIG 2 dargestellt, in der das erste dritte Signal S₀₃ zum Zeitpunkt t'₃₀ erst nach dem Zeitpunkt t'₉₂ des letzten zweiten Signals S₉₂ gesendet wird. Auch zwischen diesen Signalen S₉₂, S₀₃ liegt jeweils ein Zeitraum ohne Signale, sodass sich auch die Signale S₉₂, S₀₃ nicht gegenseitig stören.

Auf diese Weise kann eine Signalübertragung zwischen allen beteiligten Sendern Tx des Zeitübertragungssystems 6 zum Empfänger Rx mit hoher Wahrscheinlichkeit gewährleistet werden. Hat der Empfänger Rx oder das Steuergerät 18 ein Signal S eines Geräts Cᵢ erkannt und fehlerfrei dessen Zeitpunkt t bestimmt, so verwirft es die nachfolgenden Signale S, auch wenn es diese einwandfrei empfangen könnte. Hierbei ist es ausreichend, nach einem einwandfreien Empfang eines Signals S jedes nachfolgend ankommende Signal des gleichen Geräts Cᵢ für einen vorbestimmten Zeitraum, beispielsweise 1 s, zu ignorieren.

Je nachdem, welches Signal empfangen und erkannt beziehungsweise fehlerfrei ausgelesen wird, kann zwischen zwei Fällen unterschieden werden.
a) Angezeigt wird die Zeit (t_{E} - Δ_{L}t),
   mit t_{E} Empfangszeit an der Anzeigetafel 20 und Δ_{L}t Laufzeit des Signals, zum Beispiel 30 ms.
b) Angezeigt wird die Zeit (t_{E} - Δ_{V}t),
   mit t_{E} Empfangszeit an der Anzeigetafel 20 und Δ_{V}t Verzögerungszeit des Signals zum Beispiel 500 ms, wenn der Empfänger Rx das Senden auf diese Zeit verzögert.

Wenn das erste Signal wegen Kollision nicht erkannt wird und ein späteres erst nach beispielsweise 5 x 15 ms = 75 ms gesendet wird, so liegt die Empfangszeit t_{E} bei t_{E} = 30 ms + 75 ms = 105 ms hinter einem Auslösezeitpunkt von zum Beispiel 100 ms. Um dennoch die Verzögerungszeit nutzen zu können, ist es vorteilhaft, wenn die Verzögerungszeit hinter dem letzten möglichen Signal liegt. Alternativ kann der Empfänger Rx mit einer variablen Verzögerungszeit arbeiten, die abhängig von der Signalwiederholung ist. Im Signal vom Empfänger Rx zum Zeitanzeigesystem 8 ist dann zweckmäßigerweise Information darüber enthalten, der wievielten Wiederholung das Signal zugeordnet ist, sodass das Zeitanzeigesystem 8 auf eine der entsprechend hinterlegten Verzögerungszeiten zurückgreifen kann.

Aus dem Vorhergehenden ist deutlich, dass es bei einer Signalkollision zu einer deutlichen Verzögerung der Darstellung der Zeit auf der Anzeigetafel 20 kommen kann. Um diese bei einer wichtigen Zeit nicht zu groß werden zu lassen, ist eine vorbestimmte Reihenfolge der Geräte Cᵢ sinnvoll. Da die Zielzeit besonders wichtig ist, ist das Zielgerät C₁ zweckmäßigerweise vor den Zwischengeräten Cᵢ angeordnet, wie dies auch in FIG 2 dargestellt und in FIG 1 durch die Reihenfolge der Geräte Cᵢ zu sehen ist. Die Anordnung ist eine zeitliche Anordnung der Reihenfolge der zweiten Signale S₁ⱼ bei zeitgleichen Signalen S₀ⱼ.

Bei einem Rennen mit Einzelstarts wird an den Geräten Cᵢ üblicherweise eine große Totzeit eingestellt, um eine Mehrfachzeitnahme eines Sportlers zu verhindern. Löst ein Sportler beispielsweise zuerst mit der Hand, dann mit seinem Oberkörper und zuletzt mit einer Schneefahne ein Gerät Cᵢ dreimal aus, so sollte nur der erste Betätigungszeitpunkt tᵢ des Zeitnehmers 10 verwendet werden. Wird beispielsweise eine Totzeit von 1 Sekunde eingestellt, so werden die beiden späteren Betätigungszeitpunkte tᵢ des Zeitnehmers 10 unterdrückt.

Bei einem Rennen mit einem Massenstart kommt es jedoch häufig vor, dass zwei Sportler fast gleichzeitig an einem Zeitnehmer 10 ankommen und zwei Signale S₀ⱼ desselben Zeitnehmers 10 ausgelöst werden sollen. Es ist insofern sinnvoll, die Totzeit an dem Zeitnehmer 10 oder am System insgesamt sehr gering einzustellen, beispielweise auf 1/100 Sekunde oder noch geringer. Hierbei kann es vorkommen, dass zwei Signale S miteinander kollidieren, wie im Folgenden anhand FIG 3 erläutert ist.

FIG 3 zeigt die Signale S₁ⱼ des Zielgeräts C₁ auf zwei Zeitschienen. Es sei angenommen, dass zwei Läufer fast zeitgleich über die Ziellinie laufen. Die erste Zeitschiene zeigt die Signale S, die durch den Zieleinlauf des ersten Läufers erzeugt werden, die zweite Zeitschiene die Signale S, die durch den Zieleinlauf des zweiten Läufers erzeugt werden.

Die Signale S₁ⱼₖ sind hierbei so codiert, dass sie die ID des Zielgeräts C₁ tragen, in FIG 3 der erste Index 1. Außerdem tragen sie auch die Seriennummer der aktuellen Signalserie, in FIG 3 die Serie 6 auf der ersten Zeitschiene und die Serie 7 auf der zweiten Zeitschiene. Der zweite Index j gibt also an, das wievielte Mal das Zielgerät ausgelöst hat. Im Beispiel aus FIG 3 zeigt die erste Zeitschiene den Einlauf des sechsten Läufers an und die zweite Zeitschiene den Einlauf des siebenten Läufers, wobei in diesem Ausführungsbeispiel davon ausgegangen wird, dass es keine Mehrfachauslösungen eines Läufers gibt. Der dritte Index k in der Darstellung aus FIG 3 gibt die Signalnummer der Serie an. Da jede Serie drei Signale aufweist, wie auch zu FIG 2 beschrieben, läuft der dritte Index von 1 bis 3. In Kurzform: Sᵢⱼₖ, mit i: Gerät-ID; j: Seriennummer; k: Signalnummer, also Position des Signals in einer Serie.

Beim gezeigten Ausführungsbeispiel löst der siebte Läufer das Zielgerät C₁ schon zum Zeitpunkt t'₁₇₁ aus, während dieses das erste Zielsignal S₁₆₁, das der sechste Läufer zum Zeitpunkt t'₁₆₁ ausgelöst hat, noch sendet. Das erste Zielsignal S₁₇₁ des siebten Läufers kann daher nicht gesendet werden. Es fällt einfach aus. Die Zeit, die das Zielgerät C₁ vom Unterbrechen der Lichtschranke 10 bis zum Absenden des Signals S₁ⱼ₁ braucht, im obigen Ausführungsbeispiel waren es beispielhaft 25 ms, seien hierbei der Einfachheit halber vernachlässigt.

Um die Zeit des siebten Läufers auch nehmen beziehungsweise anzeigen zu können, wird von jeder der beiden kollidierenden Serien zumindest ein Signal S ausgelassen zugunsten des entsprechenden Signals der anderen Serie. Dies ist in FIG 3 gezeigt. Das erste Signal S₁₆₁ der ersteren der beiden kollidierenden Serien wird gesendet, das erste Signal S₁₇₁ der zweiten der beiden kollidierenden Serien wird ausgelassen. Das zweite Signal S₁₆₂ der ersteren der beiden kollidierenden Serien wird ausgelassen und das zweite Signal S₁₇₂ der zweiten der beiden kollidierenden Serien wird gesendet. Und das dritte Signal S₁₆₃ der ersteren der beiden kollidierenden Serien wird gesendet, das dritte Signal S₁₇₃ der zweiten der beiden kollidierenden Serien wird ausgelassen. Selbstverständlich ist es auch möglich, die Reihenfolge der Auslassungen anders auszuführen.

Dieser alternierende Signalverzicht ist nur dann notwendig, wenn Signale S mit gleichen Signalnummern aufeinandertreffen, also die ersten Signale von zwei Serien, die zweiten Signale von zwei Serien und/oder die dritten Signale von zwei Serien.

Wenn Signale unterschiedlicher Signalnummer aufeinandertreffen kann stets das zuletzt ausgelöste Signal weggelassen werden. Dann kann das Senden des Signals, dessen Senden bereits begonnen hat, fortgesetzt werden.

Bei dem zu FIG 3 beschriebenen Verfahren kann es sein, dass eine Mehrfachauslösung durch einen Läufer mehrere Zieleinläufe simuliert. Das kann - wie üblich - durch die Einstellung einer geeigneten Totzeit verhindert werden.

### Bezugszeichenliste

- 2: Zeitdatensystem
- 4: Zeitnahmesystem
- 6: Zeitübertragungssystem
- 8: Zeitanzeigesystem
- 10: Zeitnehmer
- 12: Lichtsender
- 14: Spiegel
- 16: Lichtempfänger
- 18: Steuereinheit
- 20: Anzeigetafel
- 22: Uhr
- 24: Uhr
- 26: Uhr
- C₀: Startgerät
- C₁: Zielgerät
- C₂₋₉: Zwischengerät
- Rx: Empfänger
- Sᵢⱼₖ: Signal
- tᵢ: Zeitpunkt
- Tx: Sender

## Patentansprüche

1. Verfahren zum Übertragen von mehreren gemessenen Zeitpunkten (tᵢ) durch mehrere Sender (Tx), wobei die Sender (Tx) jeweils Geräten (C) zugeordnet sind, die ein Startgerät (C₀), ein Zielgerät (C₁) oder eines von mehreren Zwischengeräten (Cᵢ) sind, wobei bei dem Verfahren ein erster Zeitpunkt (tᵢ) durch einen ersten Zeitnehmer (10) und ein zweiter Zeitpunkt (tᵢ) durch einen zweiten Zeitnehmer (10) erfasst wird und der erste Zeitpunkt (tᵢ) von einem ersten Sender (Tx) und der zweite Zeitpunkt (tᵢ) von einem zweiten Sender (Tx) jeweils mit einem Signal (Sᵢ) zu einem gemeinsamen Empfänger (Rx) übertragen werden, die Sender (Tx) jeweils eine Serie mit mehreren ihrem Zeitpunkt (tᵢ) zugeordneten Signalen (Sᵢ) senden,
**dadurch gekennzeichnet,**
**dass** die Signale (Sᵢ) so gesendet werden, dass bezogen auf die Situation, in der das erste Signal (Sᵢ₁) von zumindest drei Sendern (Tx) jeweils zeitgleich gesendet wird,
- das dritte Signal (Sᵢ₃) eines jeden Senders (Tx) erst nach dem letzten zweiten Signal (Sᵢ₂) aller Sender (Tx) gesendet wird und
- der Zeitabstand zwischen benachbarten dritten Signalen (Sᵢ₃) größer als zwischen benachbarten zweiten Signalen (Sᵢ₂) ist.

2. Verfahren nach Anspruch 1,
**dadurch gekennzeichnet,**
**dass** die Zeitpunkte (tᵢ) Messzeitpunkte einer Sportveranstaltung sind und die Sender an Zeitnehmern angeordnet sind, die die Messzeitpunkte messen.

3. Verfahren nach Anspruch 1 oder 2,
**dadurch gekennzeichnet,**
**dass** der erste Zeitpunkt (t₀) ein Startzeitpunkt eines Rennens und der zweite Zeitpunkt (t₁) ein Zieleinlaufzeitpunkt des Rennens ist und ein dritter Zeitpunkt (tᵢ) eine Zwischenzeit aus diesem Rennen ist, die von einem dritten Sender (Tx) zum Empfänger (Rx) gesendet wird.

4. Verfahren nach einem der vorhergehenden Ansprüche,
**dadurch gekennzeichnet,**
**dass** zumindest einer der Zeitpunkte (tᵢ) auf einem Zeitanzeigesystem (8) angezeigt wird.

5. Verfahren nach einem der vorhergehenden Ansprüche,
**dadurch gekennzeichnet,**
**dass** die Signale (Sᵢ) eine ID des Senders (Tx) und die Sequenznummer des Signals (Sᵢ) beinhalten.

6. Verfahren nach einem der vorhergehenden Ansprüche,
**dadurch gekennzeichnet,**
**dass** zumindest drei Sender (Tx) vorhanden sind und ein Zeitabstand zwischen Signalen einer Serie (Sᵢ) des dritten Senders (Tx) größer ist als die Zeitabstände zwischen den Signalen einer Serie (Sᵢ) der ersten beiden Sender (Tx).

7. Verfahren nach einem der vorhergehenden Ansprüche,
**dadurch gekennzeichnet,**
**dass** bei zeitgleichem ersten Signal (Sᵢ) dreier Sender (Tx) deren zweite Signale (Sᵢ) so in der Zeit liegen, dass die Zeitabstandsdifferenzen zwischen diesen zweiten Signalen (Sᵢ) gleich groß sind.

8. Verfahren nach einem der vorhergehenden Ansprüche,
**dadurch gekennzeichnet,**
**dass** der Zeitabstand zwischen dem ersten und dem zweiten Signal (Sᵢ) eines jeden der Sender (Tx) kleiner ist, als der Zeitabstand zwischen dem zweiten und dem dritten Signal (Sᵢ) der Sender (Tx).

9. Verfahren nach einem der vorhergehenden Ansprüche,
**dadurch gekennzeichnet,**
**dass** der gemeinsame Empfänger (Rx), insbesondere zu jeder einem Zeitpunkt (tᵢ) zugeordneten Signalsequenz genau ein Ausgabesignal an eine Ausgabeeinheit (20) sendet, die den Zeitpunkt (tᵢ) ausgibt, wobei das Ausgabesignal zumindest implizit den Zeitpunkt (tᵢ) und einen Ausgabebefehl zum Ausgeben des Zeitpunkts (tᵢ) beinhaltet, wobei der Ausgabebefehl nur 1x pro Signalsequenz zu einem Zeitpunkt (tᵢ) gegeben wird.

10. Verfahren nach Anspruch 9,
**dadurch gekennzeichnet,**
**dass** der gemeinsame Empfänger (Rx) das Ausgabesignal mit einer Zeitverzögerung an die Ausgabeeinheit (20) ausgibt, so dass die Ausgabezeit, zu der der Empfänger (Rx) das Ausgabesignal ausgibt, unabhängig von der Ankunftszeit des Signals (Sᵢ) beim Empfänger (Rx) ist, wobei die Ausgabezeit unabhängig von der Ankunftszeit des Signals (Sᵢ) beim Empfänger (Rx) stets eine vorbestimmte Zeitdauer nach dem gemessenen Zeitpunkt (tᵢ) liegt.

11. Verfahren nach einem der vorhergehenden Ansprüche,
**dadurch gekennzeichnet,**
**dass** bei Signalkollision einer zweiten Serie eines Senders (Tx) mit einer ersten und früheren Serie desselben Senders (Tx) von jeder der beiden Serien zumindest ein Signal ausgelassen wird, wobei die Signale beider Serien alternierend ausgelassen werden.

12. Vorrichtung zum Anzeigen von mehreren gemessenen Zeitpunkten (tᵢ), umfassend mehrere Zeitnehmer (10) mit jeweils zumindest einem Sender (Tx), einen Empfänger (Rx) zum Empfangen von Signalen (Sᵢ) der Sender (Tx) und ein mit dem Empfänger (Rx) verbundenes Zeitanzeigesystem (8) zum Anzeigen von Zeitpunkten (tᵢ), wobei die Sender (Tx) jeweils Geräten (C) zugeordnet sind, die ein Startgerät (C₀), ein Zielgerät (C₁) oder eines von mehreren Zwischengeräten (Cᵢ) sind, und die Sender (Tx) dazu eingerichtet sind, jeweils mehrere ihrem Zeitpunkt (tᵢ) zugeordnete Signale (Sᵢ) zu senden,
**dadurch gekennzeichnet,**
**dass** die Sender (Tx) dazu eingerichtet sind, die Signale (S) so zu senden, dass bezogen auf die Situation, in der das erste Signal (Sᵢ₁) von zumindest drei Sendern (Tx) jeweils zeitgleich gesendet wird,
- das dritte Signal (Sᵢ₃) eines jeden Senders (Tx) erst nach dem letzten zweiten Signal (Sᵢ₂) aller Sender (Tx) gesendet wird und
- der Zeitabstand zwischen benachbarten dritten Signalen (Sᵢ₃) größer als zwischen benachbarten zweiten Signalen (Sᵢ₂) ist.

## Claims

1. Method for transmitting multiple measured times (tᵢ) by way of multiple transmitters (Tx), each of the transmitters (Tx) being associated with devices (C) that are a starting device (C₀), a target device (C₁) or one of multiple intermediate devices (Cᵢ), wherein the method involves recording a first time (tᵢ) by way of a first timer (10) and a second time (tᵢ) by way of a second timer (10) and transmitting the first time (tᵢ) from a first transmitter (Tx) and the second time (tᵢ) from a second transmitter (Tx) to a common receiver (Rx) using a respective signal (Sᵢ), and
each of the transmitters (Tx) sends a series comprising multiple signals (Sᵢ) associated with its time (tᵢ), **characterized**
**in that** the signals (Sᵢ) are sent in such a way that, based on the situation in which the first signal (Sᵢ₁) is sent by each of at least three transmitters (Tx) simultaneously,
- the third signal (Sᵢ₃) of each transmitter (Tx) is sent only after the last second signal (Sᵢ₂) of all the transmitters (Tx) and
- the interval of time is greater between adjacent third signals (Sᵢ₃) than between adjacent second signals (Sᵢ₂).

2. Method according to Claim 1,
**characterized**
**in that** the times (tᵢ) are measurement times relating to a sports event and the transmitters are arranged on timers that measure the measurement times.

3. Method according to Claim 1 or 2,
**characterized**
**in that** the first time (t₀) is a start time of a race and the second time (tᵢ) is a finish time of the race and a third time (tᵢ) is an intermediate time from that race that is sent from a third transmitter (Tx) to the receiver (Rx).

4. Method according to one of the preceding claims,
**characterized**
**in that** at least one of the times (tᵢ) is displayed on a time display system (8).

5. Method according to one of the preceding claims,
**characterized**
**in that** the signals (Sᵢ) contain an ID of the transmitter (Tx) and the sequence number of the signal (Sᵢ).

6. Method according to one of the preceding claims,
**characterized**
**in that** there are at least three transmitters (Tx) and an interval of time between signals of a series (Sᵢ) of the third transmitter (Tx) is greater than the intervals of time between the signals of a series (Sᵢ) of the first two transmitters (Tx).

7. Method according to one of the preceding claims,
**characterized**
**in that**, when the first signals (Sᵢ) of three transmitters (Tx) are simultaneous, the timings of the second signals (Sᵢ) of said transmitters are such that the time interval differences between these second signals (Sᵢ) are of equal magnitude.

8. Method according to one of the preceding claims,
**characterized**
**in that** the interval of time between the first and second signals (Sᵢ) of each of the transmitters (Tx) is less than the interval of time between the second and third signals (Sᵢ) of the transmitters (Tx).

9. Method according to one of the preceding claims,
**characterized**
**in that** the common receiver (Rx), in particular for each signal sequence associated with a time (tᵢ), sends precisely one output signal to an output unit (20) that outputs the time (tᵢ), the output signal at least implicitly containing the time (tᵢ) and an output command to output the time (tᵢ), the output command being given only 1x per signal sequence at a time (tᵢ).

10. Method according to Claim 9,
**characterized**
**in that** the common receiver (Rx) outputs the output signal to the output unit (20) with a time delay, and so the output time at which the receiver (Rx) outputs the output signal is independent of the time of arrival of the signal (Sᵢ) at the receiver (Rx), the output time always being a predetermined length of time after the measured time (tᵢ) regardless of the time of arrival of the signal (Sᵢ) at the receiver (Rx).

11. Method according to one of the preceding claims,
**characterized**
**in that** a signal collision between a second series of a transmitter (Tx) and a first and earlier series of the same transmitter (Tx) results in at least one signal being omitted from each of the two series, the signals of both series being omitted alternately.

12. Device for displaying multiple measured times (tᵢ), comprising multiple timers (10), each of which has at least one transmitter (Tx), a receiver (Rx) for receiving signals (Sᵢ) of the transmitters (Tx) and a time display system (8) connected to the receiver (Rx) for displaying times (tᵢ), each of the transmitters (Tx) being associated with devices (C) that are a starting device (C₀), a target device (C₁) or one of multiple intermediate devices (Cᵢ), and each of the transmitters (Tx) being configured to send multiple signals (Sᵢ) associated with its time (tᵢ),
**characterized**
**in that** the transmitters (Tx) are configured to send the signals (S) in such a way that, based on the situation in which the first signal (Sᵢ₁) is sent by each of at least three transmitters (Tx) simultaneously,
- the third signal (Sᵢ₃) of each transmitter (Tx) is sent only after the last second signal (Sᵢ₂) of all the transmitters (Tx) and
- the interval of time is greater between adjacent third signals (Sᵢ₃) than between adjacent second signals (Sᵢ₂) .

## Revendications

1. Procédé de transmission par plusieurs émetteurs (Tx) de plusieurs points temporels (tᵢ) mesurés, les émetteurs (Tx) étant respectivement associés à des appareils (C) qui sont un appareil de départ (C₀), un appareil de destination (C₁) ou l'un de plusieurs appareils intermédiaires (Cᵢ), dans lequel, conformément au procédé, un premier point temporel (tᵢ) est détecté par un premier compteur de temps (10) et un deuxième point temporel (tᵢ) est détecté par un deuxième compteur de temps (10), le premier point temporel (tᵢ) étant transmis par un premier émetteur (Tx) et le deuxième point temporel (tᵢ) étant transmis par un deuxième émetteur (Tx), respectivement avec un signal (Sᵢ), à un récepteur commun (Rx), et
les émetteurs (Tx) émettent respectivement une série de plusieurs signaux (Sᵢ) associés à leur point temporel (tᵢ),
**caractérisé**
**en ce que** les signaux (Sᵢ) sont émis de telle sorte que, par rapport à la situation dans laquelle le premier signal (Sᵢ₁) est respectivement émis simultanément par au moins trois émetteurs (Tx),
- le troisième signal (Sᵢ₃) de chaque émetteur (Tx) n'est émis qu'après le dernier deuxième signal (Sᵢ₂) de tous les émetteurs (Tx), et
- l'intervalle de temps est plus long entre des troisièmes signaux (Sᵢ₃) adjacents qu'entre des deuxièmes signaux (Sᵢ₂) adjacents.

2. Procédé selon la revendication 1,
**caractérisé**
**en ce que** les points temporels (tᵢ) sont des points temporels de mesure d'une manifestation sportive et les émetteurs sont disposés sur des compteurs de temps qui mesurent les points temporels de mesure.

3. Procédé selon la revendication 1 ou 2,
**caractérisé**
**en ce que** le premier point temporel (t₀) est un point de départ d'une course et le deuxième point temporel (tᵢ) est un point d'arrivée de la course et un troisième point temporel (tᵢ) est un temps intermédiaire de cette course, qui est envoyé par un troisième émetteur (Tx) au récepteur (Rx).

4. Procédé selon l'une des revendications précédentes,
**caractérisé**
**en ce qu'**au moins l'un des points temporels (tᵢ) est affiché sur un système d'affichage du temps (8).

5. Procédé selon l'une des revendications précédentes,
**caractérisé**
**en ce que** les signaux (Sᵢ) comprennent un ID de l'émetteur (Tx) et le numéro de séquence du signal (Sᵢ).

6. Procédé selon l'une des revendications précédentes,
**caractérisé**
**en ce qu'**au moins trois émetteurs (Tx) sont présents et en ce qu'un intervalle de temps entre des signaux d'une série (Sᵢ) du troisième émetteur (Tx) est plus long que les intervalles de temps entre les signaux d'une série (Sᵢ) des deux premiers émetteurs (Tx).

7. Procédé selon l'une des revendications précédentes,
**caractérisé**
**en ce que**, lorsque les premiers signaux (Sᵢ) de trois émetteurs (Tx) sont simultanés, leurs deuxièmes signaux (Sᵢ) sont situés dans le temps de telle sorte que les différences d'écart de temps entre ces deuxièmes signaux (Sᵢ) soient égales.

8. Procédé selon l'une des revendications précédentes,
**caractérisé**
**en ce que** l'intervalle de temps entre les premier et deuxième signaux (Sᵢ) de chacun des émetteurs (Tx) est inférieur à l'intervalle de temps entre les deuxième et troisième signaux (Sᵢ) des émetteurs (Tx).

9. Procédé selon l'une des revendications précédentes,
**caractérisé**
**en ce que** le récepteur commun (Rx), en particulier pour chaque séquence de signaux associée à un point temporel (tᵢ), envoie exactement un signal de sortie à une unité de sortie (20) qui délivre le point temporel (tᵢ), le signal de sortie comprenant au moins implicitement le point temporel (tᵢ) et une commande de sortie permettant de délivrer le point temporel (tᵢ), la commande de sortie n'étant fournie que 1x par séquence de signaux lors d'un point temporel (tᵢ).

10. Procédé selon la revendication 9,
**caractérisé**
**en ce que** le récepteur commun (Rx) délivre le signal de sortie à l'unité de sortie (20) avec un retard temporel tel que le temps de sortie lors duquel le récepteur (Rx) délivre le signal de sortie est indépendant du temps d'arrivée du signal (Sᵢ) au récepteur (Rx), le temps de sortie étant toujours situé une durée prédéterminée après le point temporel (tᵢ) mesuré, indépendamment du temps d'arrivée du signal (Sᵢ) au récepteur (Rx).

11. Procédé selon l'une des revendications précédentes,
**caractérisé**
**en ce que**, lors d'une collision de signaux d'une deuxième série d'un émetteur (Tx) avec une première série et une série antérieure du même émetteur (Tx), au moins un signal de chacune des deux séries est omis, les signaux des deux séries étant omis en alternance.

12. Dispositif d'affichage d'une pluralité de points temporels (tᵢ) mesurés, comprenant une pluralité de compteurs de temps (10) comportant respectivement au moins un émetteur (Tx), un récepteur (Rx) destiné à recevoir des signaux (Sᵢ) en provenance des émetteurs (Tx), et un système d'affichage du temps (8) relié au récepteur (Rx) pour afficher des points temporels (tᵢ), les émetteurs (Tx) étant respectivement associés à des appareils (C) qui sont un appareil de départ (C₀), dans lequel un appareil de destination (C₁) ou l'un de plusieurs appareils intermédiaires (Cᵢ), et les émetteurs (Tx) sont conçus pour émettre respectivement plusieurs signaux (Sᵢ) associés à leur point temporel (tᵢ),
**caractérisé**
**en ce que** les émetteurs (Tx) sont conçus pour émettre les signaux (S) de telle sorte que, par rapport à la situation dans laquelle le premier signal (Sᵢ₁) est respectivement émis simultanément par au moins trois émetteurs (Tx),
- le troisième signal (Sᵢ₃) de chaque émetteur (Tx) n'est émis qu'après le dernier deuxième signal (Sᵢ₂) de tous les émetteurs (Tx), et
- l'intervalle de temps est plus long entre des troisièmes signaux (Sᵢ₃) adjacents qu'entre des deuxièmes signaux (Sᵢ₂) adjacents.
